# EUROPEAN PATENT APPLICATION

(11) **EP 4 621 081 A1**
(43) Date of publication of application: **24.09.2025**
(21) Application number: 24165568.7
(22) Date of filing: 22.03.2024
(51) Int. Cl.: C22B 3/08, C01F 5/40, C01G 45/02, C22B 3/44, C22B 7/00, C22B 26/22, C22B 47/00

(54) **A METHOD FOR RECOVERING MANGANESE FROM A DEPLETED LEACH DISPERSION, AND USE OF A DEPLETED LEACH DISPERSION**

(71) Applicant: Owatec Group Oy, 91910 Tupos (FI)
(72) Inventor: ANTIKAINEN, Jarmo, 90250 Oulu (FI); PELLINEN, Jaakko, 90520 Oulu (FI)
(74) Representative: Berggren Oy

(57) **Abstract**

The present application provides a method for recovering manganese from a depleted leach dispersion comprising manganese and one or more other metals as sulfates, the method comprising providing a depleted leach dispersion (10) comprising manganese and one or more other metals as sulfates, providing magnesium hydroxide to the depleted leach dispersion to obtain a first mixture (12) and to increase pH of the first mixture, providing compressed air to the first mixture and/or to the dispersion in a pressure reactor to increase pressure in the reactor and to oxidize the first mixture and/or the depleted leach dispersion and/or metals contained therein, allowing one or more metals other than magnesium, manganese and sodium, such as iron and/or aluminum, to precipitate to obtain a precipitate (14) and to obtain a supernatant (16) comprising magnesium sulfate and manganese sulfate, mixing the supernatant (16) with magnesium hydroxide to obtain a second mixture (18) and increasing the temperature of the second mixture to 60 °C or more in a pressure reactor, increasing the pressure in the reactor with compressed air, allowing manganese to oxidate in the second mixture until oxidated manganese precipitate (20) is formed, and recovering the formed oxidated manganese precipitate (20).

## Description

### Technical field

The present application relates to a method for recovering manganese from a depleted leach dispersion, and to use of a depleted leach dispersion.

### Background

In metal leaching plants, valuable metals are extracted or precipitated after leaching, leaving a depleted dispersion that still has other metals and acid in it. This raffinate usually does not have commercial value, and it must be neutralized, and the remaining metals must be removed before disposing of the dispersion. The commonly used chemical for prior art processes is calcium hydroxide, which produces gypsum waste and metal hydroxides. However the gypsum waste is usually contaminated with metals, which prevents any practical use of the gypsum.

There is a need to find new methods for recovering valuable metals from depleted leach dispersions, which methods enable obtaining metals in a form which can be utilized in further processes or uses. It is also desired to minimize the formation of useless waste material and to minimize the use of undesired and/or harmful reagents.

### Summary

The present method enables recovering manganese from a depleted leaching dispersions, while overcoming drawbacks of prior art. The method enables manganese recovery from multi-metal sulfate dispersions using magnesium hydroxide.

The idea is to recover manganese with magnesium hydroxide in a pressure reactor to produce pure magnesium sulfate solution and valuable manganese sulfate precursor from the multi-metal sulfate dispersion. At ambient pressure, magnesium hydroxide does not raise the pH level enough to precipitate manganese sufficiently even if the temperature is raised and the slurry is aerated. Compressed air in a pressure reactor alone does not precipitate manganese either. However in the present case it was found out that the combination of these two resulted in a valuable manganese precipitate and manganese-barren magnesium sulfate solution.

The present application provides a method for recovering manganese from a depleted leach dispersion comprising manganese and one or more other metals as sulfates, the method comprising
- providing a depleted leach dispersion comprising manganese and one or more other metals as sulfates,
- providing magnesium hydroxide to the depleted leach dispersion to obtain a first mixture and to increase pH of the first mixture, preferably to 5-6,
- providing compressed air to the first mixture and/or to the depleted leach dispersion in a pressure reactor to increase pressure in the reactor and to oxidize the first mixture and/or the depleted leach dispersion and/or metals contained therein,
- allowing one or more metals other than magnesium, manganese and sodium, such as iron and/or aluminum, to precipitate to obtain a precipitate and to obtain a supernatant comprising magnesium sulfate and manganese sulfate,
- separating the precipitate,
- mixing the supernatant with magnesium hydroxide to obtain a second mixture and increasing the temperature of the second mixture to 60 °C or more in a pressure reactor,
- increasing the pressure in the reactor with compressed air, such as to 6 bar or more, preferably after the target temperature of 60 °C or more is obtained,
- allowing manganese to oxidate in the second mixture until oxidated manganese precipitate is formed, and
- recovering the formed oxidated manganese precipitate.

The present application also provides use of a depleted leach dispersion comprising manganese and one or more other metals as sulfates for recovering manganese with the method.

The main embodiments are characterized in the independent claims. Various embodiments are disclosed in the dependent claims. The embodiments and examples disclosed herein are mutually freely combinable unless otherwise explicitly stated.

The present process is simple, relatively safe and can be carried out at a variety of locations and by a variety of operators. Existing equipment can be used and no expensive reagents or equipment are needed. As the same reagents magnesium hydroxide and pressurized air are used throughout the process, the process is simplified. There is no need to arrange and control dosing of different reagents. The present process therefore saves time and money, and enables efficient recovery of manganese.

### Brief description of the drawings

Figure 1 shows a flowchart of an example of the method.
Figure 2 shows pH change in iron removal with 95 g/l Mg(OH)₂ slurry.
Figure 3 shows temperature change in iron removal after addition 95 g/l Mg(OH)₂ slurry, wherein the temperature change includes drop of temperature after Mg(OH)₂ addition.
Figure 4 shows temperature change in iron removal after addition of 95 g/l Mg(OH)₂ slurry.
Figure 5 shows iron concentration change in iron removal with 95 g/l Mg(OH)₂ slurry.
Figure 6 shows Mn concentration change in Mn recovery with 25 g/l Mg(OH)₂ slurry.
Figure 7 shows pH change in Mn recovery with 25 g/l Mg(OH)₂ slurry.
Figure 8 shows temperature change in Mn recovery with 22 g/l Mg(OH)₂ slurry.
Figure 9 shows a sample of depleted leach dispersion used as starting material.
Figure 10 shows a sample of reaction mixture after precipitation of iron.
Figure 11 shows a sample of supernatant after filtrating the iron precipitate.
Figure 12 shows a sample of reaction mixture after precipitation of manganese.

### Detailed description

In this specification, percentage values, unless specifically indicated otherwise, are based on weight (w/w, by weight, or wt%). In specific examples the embodiments and examples specified with the open term "comprise" may be further limited with a closed term "consisting of".

The use of magnesium hydroxide in manganese precipitation from mixed magnesium-manganese sulfate dispersion at elevated temperatures produces a precipitate, which contains substantially only manganese dioxide and residual unreacted magnesium hydroxide.

The use of magnesium hydroxide in manganese recovery enables producing pure magnesium sulfate solution. The use of compressed air is a safer alternative to toxic sulfur dioxide/oxygen mixture used in prior art methods. The residual magnesium in the manganese precipitate is washed away and can be circulated back to the process. The use of magnesium hydroxide in every precipitation step, such as for both iron and manganese removal, raises the magnesium concentration of the solution, so the magnesium sulfate is crystallized more easily, for example to produce epsomite.

The present disclosure provides a method for recovering manganese from depleted leach dispersion 10, comprising manganese and one or more other metals as sulfates. This dispersion may be called as a multi-metal sulfate dispersion. The leach dispersion may be also called as leaching dispersion. The depleted leach dispersion is obtained from leaching of metals from a process, which provides suitable metals as sulfates in the depleted leach dispersion so that the present method can be carried out and one or more of the leached metals can be recovered. The depleted leach dispersion can be also called as used leach dispersion and/or a raffinate, and in general it refers to a leach dispersion or solution, which is substantially depleted of metals previously leached, *i.e.* wherefrom these metals have been substantially removed. The original leaching process may be carried out at a plant of suitable industry, and/or the raw material to be leached may be obtained from a plant of suitable industry, such as metal industry or mining industry. In one embodiment the depleted leach dispersion is obtained from leaching of metals, such as furnace fines, from a hydrometallurgical process. In one example the depleted leach dispersion is obtained from leaching of metals from a smelting plant.

A dispersion disclosed herein may be a solution. Solution is a homogeneous mixture where the dispersed particles will not settle if the solution is left undisturbed for a prolonged period of time. A dispersion disclosed herein may be also a suspension. Suspension is a heterogeneous dispersion of larger particles, such as insoluble solids, in a medium. Unlike solution, the suspended particles will settle out of the mixture if left undisturbed for a prolonged period of time. The dispersions disclosed herein comprising insoluble particles, such as precipitated particles, may be suspensions, and they may be turbid. A precipitate refers to an insoluble solid form of substance, which can be separated from a solution. Precipitation is the process of transforming a dissolved substance into an insoluble solid.

The depleted leach dispersion 10 may be a solution, which may be substantially clear. However the depleted leach dispersion may be also in another form, such as a suspension, for example if it is already oxidized at some degree, which could cause a part of iron and/or other metals to precipitate. This could be the case for example if the depleted lech dispersion has been oxidized with hydrogen peroxide to remove hydrogen sulfide, wherein part of two-valent iron has been precipitated as three-valent iron. Depleted leach dispersions in the form of solution and/or dispersion can be treated with the present method.

In one embodiment the depleted leach dispersion is obtained from leaching of metals from a process of mining industry, such as in cases of treatment of sulfide ores.

The depleted leach dispersion may be provided in a container, and/or it may be provided, such as conveyed, to the reactor. The depleted leach dispersion may be conveyed directly from the leaching, or the present method may be carried out at the same or related container wherein the original leaching has been carried out. Therefore in one example the present method may be carried out at the same facilities, premises or plant and/or in the same system as the leching. With this way problems relating to handling of the depleted leach dispersion can be solved already at the site of leaching, *i.e.* the method may be *on site* method. The present method can therefore be carried out by the same operator that carried out the leaching. In another example the present method is carried out at different location, premises and/or plant than the original leaching. A different operator may carry out the method, or the operator may be the same, such as the same company. However the present method can enable different operators or sub-operators to concentrate on different phases of the whole production chain, and for example to use their expertise, existing equipment and/or other know-how, facilities, abilities to further process the end product(s), and/or the like abilities, which would make it reasonable to carry out certain phase by a certain operator.

In one embodiment the depleted leach dispersion comprises one or more of aluminum sulfate, chromium sulfate, iron sulfate, magnesium sulfate and manganese sulfate. The dispersion may not comprise zinc, nickel, cobalt and/or copper, or the dispersion may not substantially comprise one or more of these, as they may be already removed and/or the source of the depleted leach dispersion may be different from such cases wherein these metals would be present.

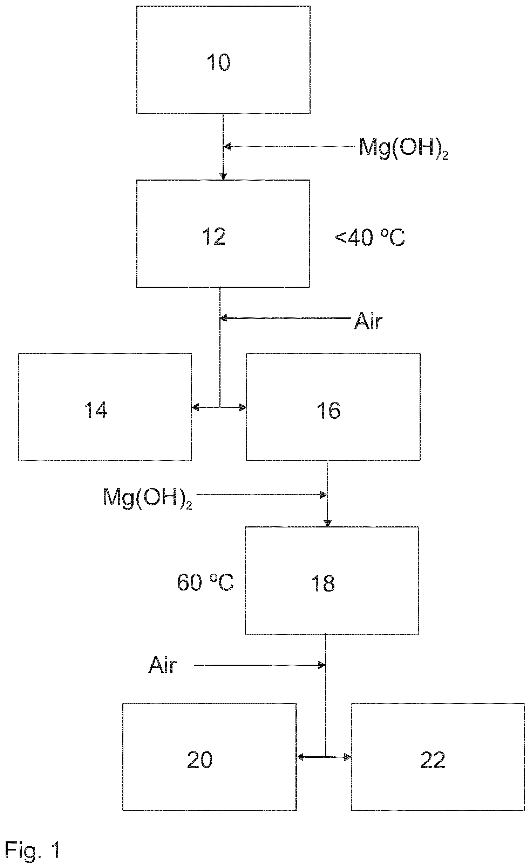

Primarily it is desired to separate and recover manganese from the depleted leach dispersion, but also other metals present in the dispersion may be separated and/or recovered. An example of the present method is presented in the flow chart of Figure 1.

The method comprises providing a depleted leach dispersion 10 comprising manganese and one or more other metals as sulfates. The depleted leach dispersion has a low pH, for example it may have a pH of 3.5 or less, such as 3.0 or less.

The method comprises providing magnesium hydroxide (Mg(OH)₂), preferably only magnesium hydroxide or a dispersion thereof, to the depleted leach dispersion 10 to obtain a first mixture 12 and to increase pH of the first mixture.

The pH may be increased to at least 5, such as to a pH in the range of 5-8, such as 5-6. The pH will increase rapidly after addition of the magnesium hydroxide, but will usually slightly decrease after iron oxidation begins. The mixture may be mixed by using a suitable mixer.

The magnesium hydroxide may be provided as an aqueous dispersion, such as an aqueous slurry, which may have a magnesium hydroxide concentration of 40-60% by weight, such as about 50% by weight. The magnesium hydroxide may be provided in an amount sufficient to provide the desired effect(s), such as increase in pH. The amount of magnesium hydroxide may be estimated on the basis of the amount of metals other than magnesium, manganese and sodium, such as at least iron, and the magnesium hydroxide may be provided in substantially stoichiometric or superstoichiometric amounts, such as excess molar amounts, to metals other than magnesium, manganese and sodium.

The temperature may not need to be increased and/or controlled at this point. In tests the temperature of the depleted leach dispersion was 40 °C before Mg(OH)₂ addition and after that it decreased to 30 °C. The temperature may be obtained and/or maintained at such level, such as at 40 °C or less, preferably at 35°C or less, until the oxidation with compressed air is ended. This temperature may be the temperature of the first oxidation. In one embodiment the method comprises maintaining the temperature of the first mixture, or the temperature of the first oxidation, at 40 °C or less, preferably at 35°C or less. Too high temperature shall be avoided to prevent manganese precipitating with the other metals, *i.e.* the temperature may be a temperature wherein the manganese remains soluble. If necessary, the temperature may be controlled, for example the solution may be cooled by using suitable cooling means.

The oxidation is carried out by providing air to the first mixture 12. The air may be provided already to the depleted leach dispersion. This is a first oxidation. The method comprises providing compressed air to the first mixture and/or to the depleted leach dispersion 12 in a pressure reactor to increase pressure in the reactor and to oxidize the first mixture and/or the depleted leach dispersion. Oxidizing the depleted leach dispersion and/or the first mixture may comprise oxidizing and/or precipitating one or more metals in the depleted leach dispersion and/or in the first mixture, such as metals other than magnesium, manganese and sodium, which oxidized metals may precipitate in the reaction conditions, preferably as metal oxides. The method may comprise allowing the metals to precipitate. In the oxidations disclosed herein air may be provided to the mixtures or the dispersions and/or to the reactor by providing an inlet for air, and providing air through the inlet preferably with a controlled flow rate and/or dosage, and/or to obtain a desired oxidation level.

It was found out that it is preferred to provide the air as compressed or pressurized and/or to provide pressurized oxidation conditions. Without pressurizing the increase in pH could cause gelling of the first mixture and/or formation of hydroxide precipitate, which could capture and enclose a large portion of the mixture. These shall be avoided as they would have a negative effect to the process. Therefore it is preferred to provide the magnesium hydroxide to the depleted leach dispersion in a pressure reactor, such as in a pressurized pressure reactor and/or during pressurizing the pressure reactor. The magnesium hydroxide may be provided before, during and/or after providing the air and/or the pressure. The first mixture may have been formed when the air is provided, and/or the first mixture may be formed during and/or after the air is provided.

In one embodiment the depleted leach dispersion comprising manganese and one or more other metals as sulfates is provided in a pressure reactor, and preferably the magnesium hydroxide is provided to the depleted leach dispersion in the pressure reactor.

The method comprises allowing one or more metals other than manganese to precipitate to obtain a precipitate 14 and to obtain a supernatant 16 comprising soluble magnesium sulfate and manganese sulfate.

The metals other than manganese may comprise one or more selected from aluminum, chromium, and iron. Preferably the metals other than manganese are metals other than magnesium, manganese and sodium. In most cases these metals comprise iron and/or aluminum, in most cases at least iron, which can play a role in the process. For example iron is oxidized from two-valent to three-valent, which has an effect of lowering the pH. Iron is precipitated, for example as goethite. The oxidized metals other than magnesium, manganese and sodium will precipitate and/or settle, so they can be separated and/or recovered. A settling agent, such as one or more flocculants, may be used to settle the precipitated metal(s). The method comprises separating the precipitate, preferably the settled precipitate. The separation can be carried out by using any suitable method, such as by filtering, by recovering the solution above the precipitate/settled precipitate, by centrifuging, with a slurry screw and/or with a combination of thereof.

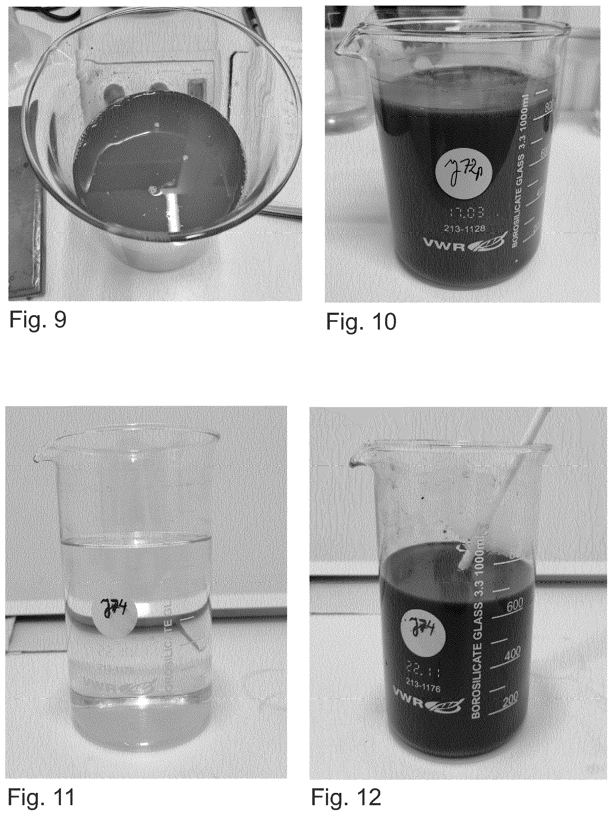

The magnesium sulfate and manganese sulfate remain solubilized or soluble in the solution, which may be called a supernatant, or a filtrate, if the precipitated metals are separated by filtering or by other suitable means. The supernatant 16 may be recovered and further processed or treated, for example in the same reactor and/or in another reactor. Preferably the supernatant 16 is further processed or treated in a pressure reactor, which may be pressurized or which may be pressurizable. The pressure reactor may be the same or different than in the first oxidation. The supernatant may be a clear or a non-turbid solution, such as can be seen in Figure 11.

The method comprises mixing the supernatant 16 with magnesium hydroxide, or adding magnesium hydroxide to the supernatant 16, to obtain a second mixture 18 and increasing the temperature of the second mixture18 to obtain a target temperature in a pressure reactor. This temperature may be the temperature of the second oxidation. The reactor may be pressurized before, during and/or after mixing the supernatant with magnesium hydroxide to obtain a second mixture and/or increasing the temperature of the second mixture. The mixture may be mixed by using a suitable mixer.

The temperature may be monitored and/or controlled, for example by cooling and/or heating by using suitable cooling and/or heating means. There may not be need to heat the mixture, as the reactions may provide enough heat to maintain the temperature at the target temperature or above. The target temperature is a temperature high enough to precipitate the manganese, such as 60 °C or more, for example 65 °C or more, or 70 °C or more. The target temperature may comprise a target temperature range, such as the target temperature may be in the range of 60-180 °C, 65-180 °C, 60-120 °C or 60-100 °C. The temperature may be higher, up to 200 °C or 300 °C, but lower upper values are preferred to keep the process safer, to save time and energy and to be able to use a variety of different equipment as the tolerance to very high temperatures is not a requirement of the method.

The method comprises increasing the pressure in the reactor, preferably with compressed air. Preferably this is carried out after the target temperature is obtained. The method may comprise providing compressed air to the second mixture and/or to the supernatant in a pressure reactor to oxidize the second mixture and/or the supernatant and to increase pressure in the reactor.

In one embodiment the pressure in the reactor is increased to 6 bar or more, and/or wherein the pressure in the reactor is 6 bar or more during oxidation. The pressure may be or may be increased to 7 bar or more, such as 8 bar or more, for example 6-10 bar, 6-9 bar or 6-8 bar. This may refer to pressurization of the first and/or the second mixture. The pressure of at least 6 bar shortens the reaction time significantly, for example so that the reaction time may be in the range of 4-8 hours, such as 4-6 hours, for example about 5 hours.

The method comprises allowing manganese to oxidate in the second mixture 18 until oxidated manganese 20 is formed. This is a second oxidation. The oxidated manganese 20 may comprise manganese dioxide and/or manganese oxide hydroxide, for example MnO(OH). In most cases the oxidated manganese comprises at least manganese dioxide. The oxidated manganese 20 precipitates and/or forms a precipitate. The formation of oxidated manganese, and/or degree of the formation, can be determined by monitoring the manganese concentration in the solution (supernatant 22). The remaining supernatant contains substantially only magnesium and sodium sulfates. In one example the manganese is allowed to oxidate until a manganese concentration of 300 mg/l or less in the supernatant 22 of the second mixture is obtained, which is acceptable for example for fertilizer use. The manganese may be allowed to oxidate until a manganese concentration of 200 mg/l or less, such as 100 mg or less, in the supernatant of the second mixture is obtained. In tests significantly lower manganese concentrations could be obtained, such as 50 mg or less, or even 20 mg or less, or 10 mg or less.

After this the method comprises recovering the formed oxidated manganese precipitate 20. The method may comprise cooling the mixture and/or allowing the mixture to cool, for example to room temperature, such as to 25 °C or less.

The formed oxidized manganese, preferably as precipitated, may be thickened in a thickener/thickening/settling/flocculating device or reactor and/or other device, reactor or container, which may comprise one or more tanks, reactors and/or other containers for thickening, settling, flocculating and/or carrying out one or more other actions which can facilitate precipitating, thickening, flocculating, settling, separating and/or recovering the oxidized manganese. One or more agents can be provided to this step, device and/or container.

In one embodiment the recovering of the oxidated manganese precipitate 20 comprises
- providing a flocculant to the second mixture comprising oxidated manganese precipitate,
- allowing the oxidated manganese precipitate to settle, and
- recovering the settled oxidated manganese precipitate.

The flocculant may be or comprise an anionic flocculant. The settling of the oxidated manganese precipitate may comprise flocculating. The flocculant(s) may be provided in a concentration efficient for flocculating the oxidated manganese, such as in the range of 5-50 ppm flocculant, such as 5-20 ppm, for example about 10 ppm of flocculant, for example anionic flocculant.

The recovering may comprise any suitable recovering method, such as filtering, centrifuging and/or the like method or combinations thereof. The oxidated manganese precipitate may be washed, such as with water or aqueous solution, either immediately after recovering, and/or before and/or after acid wash. The obtained and/or washed precipitate may be dried, such as at increased temperature, such as at 90 °C or more, for example at 100 °C or more, for example in an oven.

The recovered oxidated manganese may be the settled oxidated manganese. In one embodiment the method comprises washing the recovered oxidated manganese precipitate 20 with sulfuric acid to remove residual magnesium hydroxide and/or other substances.

Finally the oxidated manganese precipitate may be leached with acid, such as sulfuric acid. In one example the method comprises
- mixing the oxidated manganese precipitate with water, preferably to obtain a mixture and/or a dispersion, for example slurrying the oxidated manganese precipitate in water,
- leaching the oxidated manganese precipitate with sulfuric acid and a reducing agent, and
- recovering the resulting manganese sulfate, and
- crystallizing the manganese sulfate.

The reducing agent may comprise one or more of sulfur dioxide, glucose and hydrogen peroxide. Hydrogen peroxide was found especially preferred in the tests.

The manganese sulfate may be purified with a suitable method, such as by solvent extraction.

In one embodiment the method comprises, after recovering the formed oxidated manganese precipitate 20, recovering the supernatant 22 comprising magnesium sulfate, which may be removed and/or recovered from the supernatant, for example by crystallizing. In this case the method may comprise crystallizing the magnesium sulfate as epsomite. The epsomite may be provided as a fertilizer. For example the epsomite may be provided to a process of preparing a fertilizer.

The present method preferably does not introduce any new ions and/or reagents other than discussed or claimed into the dispersion. Conventional precipitating agents in manganese recovery are alkali metal hydroxides, ammonia, and calcium hydroxide/carbonate. Alkali metals, as well as ammonium ions, are notoriously difficult to remove from the solutions. The use of calcium compounds generates gypsum residue, which is contaminated with manganese, which prevents any practical use of the gypsum.

One conventional manganese precipitation procedure is oxidizing manganese with oxygen-sulfur dioxide mixture, but compressed air is a safer alternative to this. Sulphur dioxide is toxic and pure oxygen is a more dangerous oxidizer than compressed air. It is desired to avoid introducing agents, which are harmful and/or which could interfere the process, for example produce such end products which are not useful and/or which bind useful metals. It is also desired to provide a simple method. Therefore it is desired to avoid using and/or adding certain chemicals or agents in the present process. Preferably the only agents added to the dispersion are the magnesium hydroxide and the air.

In one embodiment the method is carried out in the absence of calcium hydroxide, chlorine, nitric oxide, ammonia, carbonate, sulfur dioxide and/or pure oxygen. In one embodiment the method is carried out in the absence of added calcium hydroxide, added chlorine, added nitric oxide, added ammonia, added carbonate, added sulfur dioxide and/or added pure oxygen.

The present disclosure provides use of a depleted leach dispersion comprising manganese and one or more other metals as sulfates for recovering manganese with the method disclosed herein.

In one example depleted leaching dispersion containing aluminum, iron, magnesium, and manganese sulfates is mixed with magnesium hydroxide slurry and then oxidized with compressed air in a pressurized reactor to raise the pH from about 3 to 5-6 by the effect of the magnesium hydroxide, and to precipitate iron as goethite. Aluminum is co-precipitated at this pH range. Keeping the pressure in the reactor at minimum of 6 bars shortens the reaction time significantly. If the feed solution is warm, there is no need for heating it as the iron oxidation heats the solution sufficiently.

After oxidation, the formed iron oxide slurry is separated from the solution in a thickener or with a slurry screw. The filtrate will contain magnesium sulfate and manganese sulfate.

In the next stage, the obtained manganese-magnesium sulfate solution is mixed with magnesium hydroxide and heated to at least 60 °C in a pressurized reactor. After reaching the target temperature, the pressure in the reactor is raised to at least 6 bars with compressed air. The manganese oxidation keeps the reactor at elevated temperature, so the heating requirements will be minimized.

A sufficient reaction time in manganese recovery at elevated temperature and pressure will lower the manganese concentration even to under 10 mg/l. The formed oxidated manganese slurry is settled in a thickener with a suitable flocculant and then filtered. The remaining overflow solution contains only magnesium sulfate and possibly small amounts of alkali metals, and it can be crystallized as epsomite for fertilizer use.

The oxidated manganese precipitate is washed with dilute sulfuric acid to remove residual magnesium hydroxide. After washing, the oxidated manganese precipitate is slurried in water and leached with sulfuric acid and a reducing agent, such as sulfur dioxide, glucose, or hydrogen peroxide Hydrogen peroxide was found especially advantageous in this case. The resulting manganese sulfate solution is purified with solvent extraction and crystallized afterwards.

The present process is carried out in a suitable pressure reactor, which comprises a reactor vessel or container defining a reactor space or volume or a reaction space or volume, which is configured to receive the starting material, reaction mixture, reagent(s) and/or the gases conveyed to the reactor. The reactor space or volume or the reaction space or volume contains reaction solution/dispersion/mixture and reaction atmosphere during the process. The reactor is a sealable reactor, which means that it can be operated and/or opened and closed in a sealed manner, *i.e.* to obtain an air-proof and/or a gastight reactor. The reactor may comprise one or more temperature controlling means, mixing means, sensors, valves, and the like devices and/or parts. The temperature controlling means may comprise heating means and/or cooling means, such as one or more heaters and/or coolers. The mixing means may comprise a mixer, such as a mixer comprising an actuator arranged to actuate mixing blade(s). The sensors may comprise one or more of temperature sensor, pressure sensors, pH sensors and/or any other sensors which may be required to operate the reactor and/or to controllably carry out the present method. The reactor may comprise one or more inlets and/or outlets for liquids, gases and/or solids, which inlets and/or outlets may be arranged to be used for inletting and/or outletting the raw materials, reagents, gases and/or reaction products discussed herein. The inlets and/or outlets may be equipped with one or more controllable valves, which may comprise a controllable actuator for operating the valve. For example the reactor may be connected to a source of pressurized air, wherein the air flow and/or input may be controlled by a controllable valve connected to a gas inlet. By controlling the flow and/or input of the pressurized air it is possible to control the pressure inside the reactor, and/or the reaction(s).

The reactor may comprise controlling means, such as an electronic control unit, which may be connected, such as operatively connected, to one or more of the parts disclosed herein. The controlling means may be arranged, such as programmed, to monitor, control, operate and/or adjust one or more of temperature, pressure, pH, flow, opening and/or closing of any valves, operation of any actuators, operation of mixing means and/or to carry out any other operations, preferably as feedback to one or more properties detected from the reactor, to carry out the present method or a part thereof. For example an electronic control unit may be arranged to monitor temperature and/or pressure sensor(s) in the reactor, and to control temperature and/or pressure in the reactor by adjusting one or more means operatively connected to the control unit, such as temperature controlling means and/or pressure controlling means, which may comprise any means which may be operated to have an impact to the pressure in the reactor, such as one or more valves, for example a valve connected to an inlet for pressurized air.

The reactor may be equipped and/or connected to one or more sources of materials such as solids, liquid and/or gas, which may be in one or more containers for the depleted leaching dispersion, magnesium hydroxide and/or air. The source materials and/or reagents may be arranged to be provided to the reactor, preferably in a controlled manner.

### Examples

### Example 1

800 ml of depleted leaching dispersion from leaching of metals from a hydrometallurgical process with the metal concentrations presented in Table 1 was mixed with 80 g of 50 % Mg(OH)₂-slurry and immediately put into a pressure reactor.

**Table 1.**

| Depleted leaching dispersion, 800 ml | | | | | | |
|---|---|---|---|---|---|---|
| Al (mg/l) | Fe (mg/l) | Mg (mg/l) | Mn (mg/l) | Na (mg/l) | Ni (mg/l) | Zn (mg/l) |
| 3769.54 | 29308.54 | 21758.17 | 12038.65 | 2763.18 | 32.67 | 3.82 |

The pressure was adjusted to 6 bars with compressed air and the slurry was agitated rapidly for 5 hours. The slurry's temperature was 40 °C before Mg(OH)₂ addition and after that it dropped to 30 °C and stayed about at that temperature until the air feeding stopped. The temperature was not controlled in any way. The compressed air flow was ensured by placing an outlet air pipe from the reactor in a water container and adjusting the bubbling rate.

After 5 hours, the slurry was mixed with 50 ppm of anionic flocculant and filtered using vacuum filtration. At this point, the composition of the filtrate was as presented in Table 2.

**Table 2.**

| Filtrate 100 g/l Mg(OH)₂ slurry, 5 h, 6 bar | | | | | | |
|---|---|---|---|---|---|---|
| Al, mg/l | Fe, mg/l | Mg, mg/l | Mn, mg/l | Na, mg/l | Ni, mg/l | Zn, mg/l |
| 25 | 3118 | 37949 | 11716 | 3058 | 17 | <2 |

A little part of the solution was lost in the iron precipitate, as the volume diminished by 50 ml.

After filtration, the obtained clear solution was mixed with 18.75 g of 50 % Mg(OH)₂-slurry and put into a pressure reactor. The slurry was heated to 60 °C in the reactor while agitating it rapidly. When the target temperature was met, the pressure was adjusted again to 6 bars with compressed air. The air flow was ensured similarly to the way mentioned earlier. The temperature in the reactor was kept at 60 °C with cooling water to find out if the manganese oxidation reaction keeps the solution warm.

The slurry was oxidized in the pressure reactor with compressed air for four hours and the temperature in the reactor stayed at about 60 °C for the whole time. The opening of the cooling water valve caused the temperature to drop, but the temperature always rose back, even though the heating elements were turned off after reaching the target temperature of 60 °C.

After the oxidation in the pressure reactor, the slurry was cooled to room temperature and mixed with 10 ppm of anionic flocculant. After the settling, the supernatant was filtrated, and the precipitate was washed with water in a Büchner funnel. Metal concentrations of the remaining solution are presented in Table 3.

**Table 3.**

| Supernatant, 25 g/l Mg(OH)₂, 4h, 6 bar, 60 °C | | | | | | |
|---|---|---|---|---|---|---|
| Al, mg/l | Fe, mg/l | Mg, mg/l | Mn, mg/l | Na, mg/l | Ni, mg/l | Zn, mg/l |
| <10 | <5 | 35846 | <1 | 2376 | <1 | <2 |

The precipitate from the second precipitation/oxidation step was mixed with water and pH of the slurry was adjusted to about 6 using a few milliliters of concentrated sulfuric acid. The slurry was filtered and the precipitate was washed with water in a Büchner funnel. After this, the precipitate was dried at 105 °C. Composition of the precipitate is presented in Table 4.

**Table 4.**

| Washed, dried Mn-precipitate 25 g/l Mg(OH)₂, 4 h, 6 bar, 60 °C | | | | | | | |
|---|---|---|---|---|---|---|---|
| Al, % | Fe, % | Mg, % | Mn, % | Na, % | Ni, % | S, % | Zn, % |
| 0.03 | 5.10 | 6.70 | 48.45 | <0.01 | 0.01 | 1.02 | <0.004 |

The iron content came from the first step's residual iron and the magnesium is remaining unreacted magnesium hydroxide which was not washed away in the washing step. The iron was in form of goethite. If the goethite and magnesium hydroxide are excluded from the total mass of the precipitate, the manganese concentration was about 61 %. This is quite close to the theoretical manganese content of manganese dioxide, which is 63%.

Dissolution of the manganese precipitate was tested by mixing 10 g of precipitate in 100 ml of water and adding 6.6 ml of concentrated sulfuric acid. After the addition of acid, 11.7 ml of hydrogen peroxide was added slowly in small amounts. The manganese precipitate was dissolved in less than 30 minutes.

### Example 2

Measurements were made from tests using 95 g/l Mg(OH)₂ and 25 g/l Mg(OH)₂.

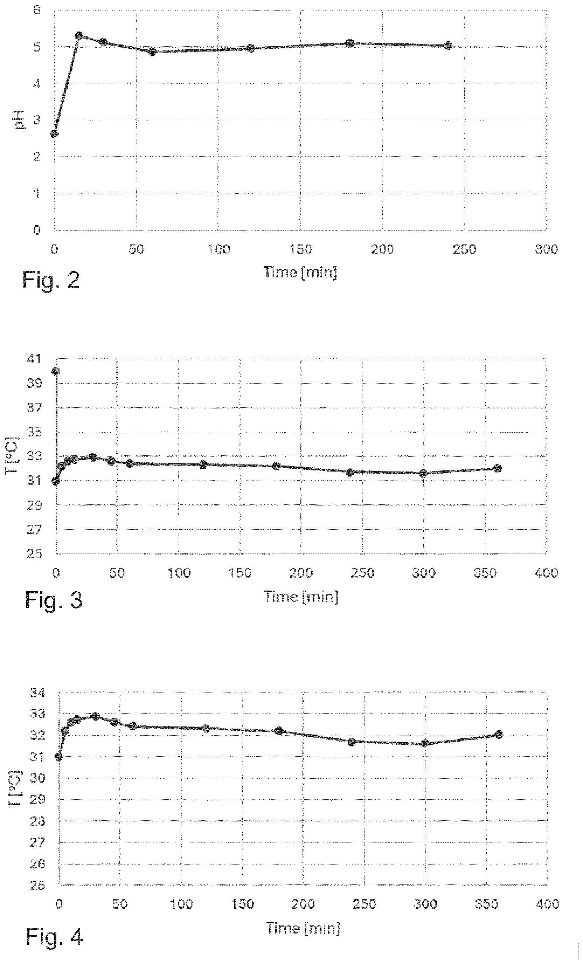

Figure 2 shows pH change in iron removal with 95 g/l Mg(OH)₂ slurry. Figure 3 shows temperature change in iron removal after addition 95 g/l Mg(OH)₂ slurry. The temperature change includes drop of temperature after Mg(OH)₂ addition, which can be seen at about time point 0.

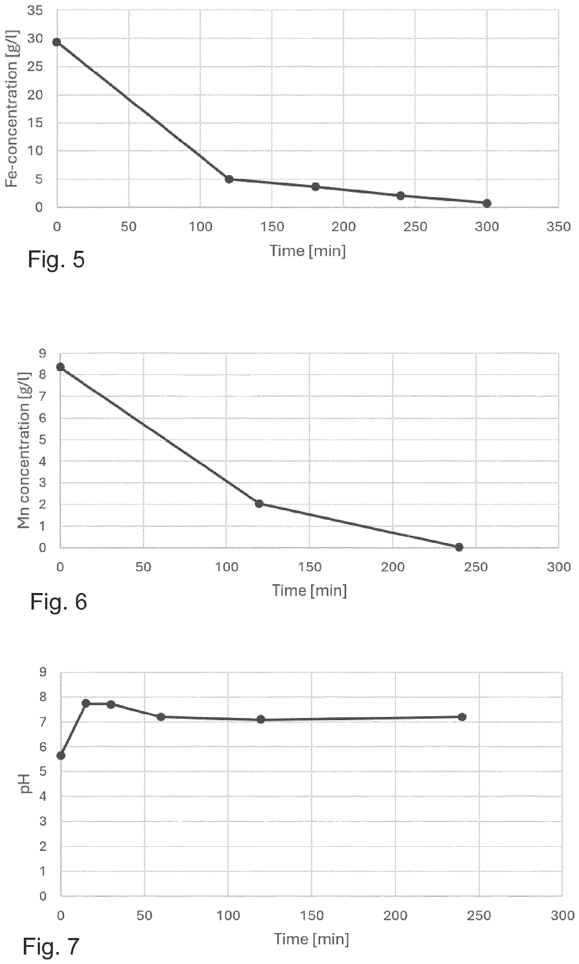

Figure 4 shows temperature change in iron removal after addition of 95 g/l Mg(OH)₂ slurry. Figure 5 shows iron concentration change in iron removal with 95 g/l Mg(OH)₂ slurry. Figure 6 shows Mn concentration change in Mn recovery with 25 g/l Mg(OH)₂ slurry. Figure 7 shows pH change in Mn recovery with 25 g/l Mg(OH)₂ slurry.

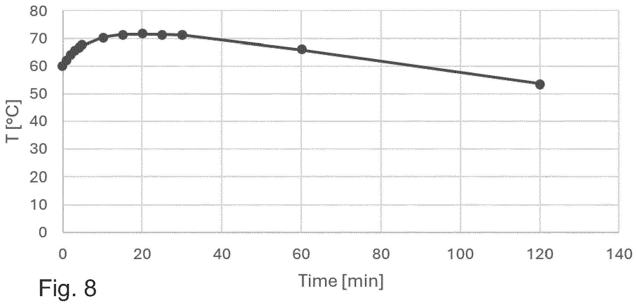

Figure 8 shows temperature change in Mn recovery with 22 g/l Mg(OH)₂ slurry. In this test the cooling circulation was not functioning, which resulted in increased temperature after starting the pressurized air feed. It can be also noted that the concentration of 22 g/l of magnesium hydroxide was not enough to react with all the manganese.

Samples of reaction mixture or supernatant were taken and are shown in Figures 9-12.

Figure 9 shows a turbid sample of depleted leach dispersion used as starting material. The metals other than magnesium, manganese and sodium, including iron, were precipitated in the reaction mixture, as shown in Figure 10. After filtration of the precipitate of the other metals including iron, a clear supernatant or filtrate was obtained, as shown in Figure 11.

The manganese was precipitated from the supernatant/filtrate and the obtained turbid reaction mixture shown in Figure 12 was obtained.

### Comparative examples

Similar processes were carried out without pressurized air. It was found out that manganese could not be removed from the depleted leach dispersion, not even if very high temperature up to 180 °C was used. The oxidation of the residual iron to hematite lowered the pH of the solution, which made the manganese precipitation even more difficult.

Also when the magnesium hydroxide was added to the depleted leach dispersion without pressurization, the increase in pH caused gelling of the mixture. Increasing the amount of magnesium hydroxide caused the gelling phase to be only temporary, but this resulted in formation of a clay-like layered double hydroxide, which absorbed a great volume of the solution leading to loss of some manganese.

In another test the depleted leach dispersion was oxidized with hydrogen peroxide after the iron removal while the pH was increased with magnesium hydroxide in an open container. This consumed large amounts of hydrogen peroxide and magnesium hydroxide, but provided a poor yield of manganese.

In further tests the iron-free depleted leach dispersion was oxidized in a heated pressure reactor without magnesium hydroxide. It was immediately clear that practically nothing happened. Similarly, when the iron-free depleted leach dispersion was heated in an open container with magnesium hydroxide without oxidation, practically nothing happened. In the pressure reactor tests, formation of brown slurry was observed in 15 minutes. After 30 minutes the slurry was much darker. In an open container the darkening happened only after hours of oxidation.

## Claims

1. A method for recovering manganese from a depleted leach dispersion comprising manganese and one or more other metals as sulfates, the method comprising
- providing a depleted leach dispersion (10) comprising manganese and one or more other metals as sulfates,
- providing magnesium hydroxide to the depleted leach dispersion to obtain a first mixture (12) and to increase pH of the first mixture, preferably to 5-6,
- providing compressed air to the first mixture (12) and/or to the depleted leach dispersion in a pressure reactor to increase pressure in the reactor and to oxidize the first mixture and/or the depleted leach dispersion and/or metals contained therein,
- allowing one or more metals other than magnesium, manganese and sodium, such as iron and/or aluminum, to precipitate to obtain a precipitate (14) and to obtain a supernatant comprising magnesium sulfate and manganese sulfate (16),
- separating the precipitate (14),
- mixing the supernatant (16) with magnesium hydroxide to obtain a second mixture (18) and increasing the temperature of the second mixture to a target temperature of 60 °C or more in a pressure reactor,
- increasing the pressure in the reactor with compressed air, such as to 6 bar or more, preferably after the target temperature is obtained,
- allowing manganese to oxidate in the second mixture until oxidated manganese precipitate (20) is formed, such as until a manganese concentration of 300 mg/l or less in the supernatant of the second mixture is obtained, and
- recovering the formed oxidated manganese precipitate (20).

2. The method of claim 1, wherein the depleted leach dispersion (10) comprising manganese and one or more other metals as sulfates is provided in a pressure reactor, and preferably the magnesium hydroxide is provided to the depleted leach solution in the pressure reactor.

3. The method of claim 1 or 2, wherein the oxidated manganese precipitate (20) comprises manganese dioxide and/or manganese oxide hydroxide.

4. The method of any of preceding claims, wherein the recovering of the oxidated manganese precipitate (20) comprises
- providing a flocculant to the second mixture comprising oxidated manganese precipitate,
- allowing the oxidated manganese precipitate to settle, such as to flocculate, and
- recovering the settled oxidated manganese precipitate, such as by filtering.

5. The method of any of preceding claims, comprising, washing the recovered oxidated manganese precipitate (20) with sulfuric acid to remove residual magnesium hydroxide.

6. The method of any of preceding claims, comprising
- mixing the manganese dioxide with water,
- leaching the manganese dioxide with sulfuric acid and a reducing agent, and
- recovering the resulting manganese sulfate, such as with solvent extraction, and
- crystallizing the manganese sulfate, wherein the reducing agent comprises one or more of sulfur dioxide, glucose and hydrogen peroxide.

7. The method of any of preceding claims, comprising, after recovering the formed oxidated manganese precipitate (20), recovering the supernatant (22) comprising magnesium sulfate, preferably crystallizing the magnesium sulfate as epsomite, and preferably providing the epsomite as a fertilizer, such as providing the epsomite to a process of preparing a fertilizer.

8. The method of any of preceding claims, wherein the method is carried out in the absence of added calcium hydroxide, added chlorine, added nitric oxide, added ammonia, added carbonate, added sulfur dioxide and/or added pure oxygen.

9. The method of any of preceding claims, wherein the pressure in the reactor is increased to 6 bar or more, and/or wherein the pressure in the reactor is 6 bar or more during oxidation.

10. The method of any of preceding claims, wherein the target temperature is in the range of 60-180 °C, 65-180 °C, 60-120 °C or 60-100 °C.

11. The method of any of preceding claims, comprising maintaining the temperature of the first mixture (12) at 40 °C or less, such as at 35°C or less.

12. The method of any of preceding claims, wherein the depleted leach dispersion (10) comprises one or more of aluminum sulfate, chromium sulfate, iron sulfate, magnesium sulfate and manganese sulfate.

13. The method of any of preceding claims, wherein the depleted leach dispersion (10) is obtained from leaching of metals from a hydrometallurgical process.

14. The method of any of claims 1-13, wherein the depleted leach dispersion (10) is obtained from leaching of metals from a process of mining industry or a smelting plant.

15. Use of a depleted leach dispersion (10) comprising manganese and one or more other metals as sulfates for recovering manganese with the method of any of preceding claims.
